# EUROPEAN PATENT APPLICATION

(11) **EP 2 919 107 A1**
(43) Date of publication of application: **16.09.2015**
(21) Application number: 13865755.6
(22) Date of filing: 12.12.2013
(51) Int. Cl.: G06F 3/0488, G06F 3/048

(54) **COMMUNICATION TERMINAL, SCREEN DISPLAY METHOD, AND RECORDING MEDIUM**

(30) Priority: 21.12.2012 JP 2012279134
(71) Applicant: NTT DOCOMO, INC., Chiyoda-ku Tokyo 100-6150 (JP)
(72) Inventor: TAGAYA, Masashi, Tokyo 100-6150 (JP); KOBAYASHI, Shigeko, Tokyo 100-6150 (JP); OKADA, Takashi, Tokyo 100-6150 (JP)
(74) Representative: MERH-IP Matias Erny Reichl Hoffmann
(86) International application number: PCT/JP2013/083307
(87) International publication number: WO 2014/097956

(57) **Abstract**

A communication terminal is provided that enables intuitive and highly preferable user operations. The communication terminal includes: a screen that can display image data; an operation acceptance unit that accepts a user operation; a communication establishment unit that establishes communication with another terminal; a data transmitting unit that transmits determination image data currently being displayed on the local terminal to the other terminal; a data receiving unit that receives determination image data from the other terminal; a relative position sensing unit that acquires a predetermined user operation and senses a relative position between the local terminal and the other terminal; a data display region detection unit that acquires a user operation on the local terminal and the other terminal, senses a display position movement operation for the determination image data currently being displayed on the local terminal and the other terminal, and detects a data display region after the movement operation for the determination image data based on the relative position; and a display control unit that, when at least part of the data display region after the movement operation for the determination image data is included in a region that can be displayed on the screen of the local terminal, displays the determination image data in the data display region after the movement operation, only in the region that can be displayed on the screen of the local terminal.

## Description

### [TECHNICAL FIELD]

The present invention relates to a communication terminal that establishes communication with another terminal and transmits and receives data, a screen display method performed by the communication terminal, and a recording medium.

### [BACKGROUND ART]

Nowadays, there is a growth in the number of electronic devices that include a touch screen display, which allows a user to perform operations for icons, windows, and the like displayed on the screen as if the user touched them directly with his or her finger. For example, by pressing a display position of an icon displayed on the touch screen display with his or her finger, the user can select the icon. Moreover, by moving the pressing finger while keeping contact of the finger with the touch screen display, the user can move the display position of the icon in a direction in which the finger is moved (drag operation). By quickly pressing the display position of the icon displayed on the touch screen display more than once, the user can view file contents corresponding to the icon (tap operation). Some of these electronic devices include a plurality of touch screen displays.

Conventional technologies for electronic devices including a plurality of touch screen displays include, for example, a technology in Patent Literature 1. An electronic device of Patent Literature 1 includes first and second touch screen displays, a detection means of detecting a touch operation indicating a direction for an object displayed on the first touch screen display, and a movement means of moving a display position of the object in a region with a combination of a first screen region of the first touch screen display and a second screen region of the second touch screen display in response to the direction indicated by the touch operation detected by the detection means. The electronic device of Patent Literature 1 can easily move objects displayed on the display by operations in which destinations can intuitively be understood.

### [PRIOR ART LITERATURE]

### [PATENT LITERATURE]

Patent Literature 1: Japanese Patent Application Laid Open No. 2011-248784

### [SUMMARY OF THE INVENTION]

### [PROBLEMS TO BE SOLVED BY THE INVENTION]

In the electronic device of Patent Literature 1, display positions of icons and the like can be moved in the region with a combination of the plurality of screen regions included in the electronic device. However, among a plurality of devices including a display screen, display positions of icons and the like cannot be moved in a region with a combination of screen regions in the plurality of devices. If it becomes possible to move display positions of icons and the like in the region with a combination of the screen regions in the plurality of devices and transmit and receive file data associated with the icons and the like among the plurality of devices as the icons and the like are moved, a user can intuitively perform user operations related to data passing among the plurality of devices. In addition, tactics on data passing can be used between users, implementing highly preferable user operations. Accordingly, an object of the present invention is to provide a communication terminal that enables intuitive and highly preferable user operations.

### [MEANS TO SOLVE THE PROBLEMS]

The communication terminal of the present invention includes a screen that can display image data, an operation acceptance unit, a communication establishment unit, a data transmitting unit, a data receiving unit, a relative position sensing unit, a data display region detection unit, and a display control unit. Image data used to determine file contents is assumed to be determination image data. The operation acceptance unit accepts a user operation. The communication establishment unit establishes communication with another terminal capable of communication. The data transmitting unit transmits, to the other terminal with which communication is established, determination image data that has not been transmitted to the other terminal with which communication is established and is currently being displayed on the local terminal. The data receiving unit receives determination image data from the other terminal with which communication is established. The relative position sensing unit acquires a predetermined user operation and senses a relative position between the local terminal and the other terminal with which communication is established. The data display region detection unit acquires a user operation on the local terminal and the other terminal with which communication is established, senses a display position movement operation for the determination image data currently being displayed on the local terminal and the other terminal with which communication is established, and detects a data display region after the movement operation for the determination image data based on the relative position. When at least part of the data display region after the movement operation for the determination image data is included in a region that can be displayed on the screen of the local terminal, the display control unit displays the determination image data in the data display region after the movement operation, only in the region that can be displayed on the screen of the local terminal.

### [EFFECTS OF THE INVENTION]

The communication terminal of the present invention enables intuitive and highly preferable user operations.

### [BRIEF DESCRIPTION OF THE DRAWINGS]

Fig. 1 is a block diagram illustrating a configuration of a communication terminal of a first embodiment of the present invention.
Fig. 2 is a flowchart illustrating operation of the communication terminal of the first embodiment of the present invention.
Fig. 3 illustrates an example of an operation performed to make a relative position sensing unit 14 sense a relative position.
Fig. 4 illustrates an example of an operation performed to make the relative position sensing unit 14 sense a relative position.
Fig. 5 illustrates a determination image data transmission operation performed by a data transmitting unit 132.
Fig. 6 illustrates a movement information transmission operation performed by the data transmitting unit 132.
Fig. 7 illustrates a file data transmission operation performed by the data transmitting unit 132.
Fig. 8 illustrates a screen display when there are three or more communication terminals.
Fig. 9 illustrates a screen display when there are three or more communication terminals.
Fig. 10 is a flowchart illustrating a variation of an operation sequence for the communication terminal of the first embodiment of the present invention.
Fig. 11 is a block diagram illustrating a configuration of a communication terminal of a second embodiment of the present invention.
Fig. 12 is a flowchart illustrating operation of the communication terminal of the second embodiment of the present invention.
Fig. 13 illustrates a screen display between terminals with different resolutions and screen sizes.
Fig. 14 is a block diagram illustrating a configuration of a communication terminal of a third embodiment of the present invention.
Fig. 15 is a flowchart illustrating operation of the communication terminal of the third embodiment of the present invention.
Fig. 16 illustrates an example of an operation performed to make a relative position sensing unit 34 sense a relative position.
Fig. 17 illustrates temporal changes in an acceleration applied to terminals 3A and 3B.
Fig. 18 is a block diagram illustrating a configuration of a communication terminal of a fourth embodiment of the present invention.
Fig. 19 is a flowchart illustrating operation of the communication terminal of the fourth embodiment of the present invention.
Fig. 20 illustrates preset split regions.
Fig. 21 illustrates preset split regions.
Fig. 22 is a block diagram illustrating a configuration of a communication terminal of a fifth embodiment of the present invention.
Fig. 23 is a flowchart illustrating operation of the communication terminal of the fifth embodiment of the present invention.
Fig. 24 illustrates an aspect in which determination image data is moved by tilting a terminal.

### [DETAILED DESCRIPTION OF THE EMBODIMENTS]

### <Explanation of Terms: Communication Terminal>

The term "communication terminal" used in the present specification refers to any device that includes a screen capable of displaying image data and can communicate with other devices. For example, types of devices to which the term "communication terminal" refers in the present specification may be mobile terminals, tablet information terminals, PDAs, game machines, personal computers (including both desktops and notebooks), e-book terminals, digital audio players, TV receivers, digital cameras, digital video cameras, digital photo frames, fax machines, copy machines, and the like. Nowadays, there are refrigerators, microwave ovens, and the like including a display screen and a communication function, and these devices are also included in communication terminals of the present invention. Communication performed by communication terminals of the present invention may be communication between different types of devices. For example, a local terminal may be a digital camera and another terminal may be a TV receiver or the like. For example, when another terminal is a non-portable device such as a refrigerator, microwave oven, or copy machine, a local terminal is preferably, for example, a mobile terminal, tablet information terminal, or the like that is a portable device. Embodiments below are described in which a mobile terminal and a tablet information terminal are selected as examples of the communication terminal.

### <Explanation of Terms: Operation Acceptance Unit>

The term "operation acceptance unit" used in the present specification refers to a general mechanism that can accept user operations. For example, an operation acceptance unit may be a set of operation button or a keyboard. In this case, a user operation is a press of a key or operation button. In the present invention, a relative position between communication terminals, a display position movement operation for determination image data, and the like are sensed through user operations, details of which will be described later. When the operation acceptance unit is implemented as a keyboard or a set of operation buttons, cross keys, a numeric keypad associated with directions, and the like, for example, are used for sensing of a relative position and a display position movement operation. For example, the operation acceptance unit may be a mouse. In this case, a user operation is mouse movement, a mouse button click, a drag operation, or the like. When the operation acceptance unit is implemented as a mouse, a click operation on a predetermined directional position on a screen, for example, can be used for sensing of a relative position, and a mouse drag operation, for example, can be used for a display position movement operation.

Obviously, it is also suitable when the operation acceptance unit is a touch screen display. In this case, a user operation is a touch operation such as a press on the touch screen, a drag operation, or a tap operation. A press operation on a predetermined directional position on a screen, for example, can be used for sensing of a relative position, and a drag operation, for example, can be used for a display position movement operation. Moreover, the operation acceptance unit may acquire user operations from an acceleration sensor, an angular velocity sensor, and the like. In this case, a user operation is, for example, an operation of shaking, tilting, or rotating a communication terminal or causing terminals to collide with each other. The embodiments below are described in which examples in which user operations are acquired from a touch screen display, an acceleration sensor, and a tilt sensor are selected as examples of the operation acceptance unit.

### <Explanation of Terms: Communication>

Although there are no specific constraints on a communication method used in the present invention, a wireless method is suitable for simple and convenient communication. In addition, the communication method is even better if it enables communication among different devices. The communication method may be, for example, wireless local area network (LAN), Bluetooth®, RFID®, Ultra Wide Band (UWB), ZigBee®, Wibree, and the like. The embodiments below are described in which wireless LAN is selected as an example of the communication method.

### <Explanation of Terms: Determination Image Data>

The term "determination image data" used in the present specification refers to general image data used to determine file contents. Determination image data includes, for example, icon images, thumbnail images, and the like. Examples of determination image data include also browser windows when a file is HTML data, windows displayed to edit document data when a file is document data, playback windows when a file is photographic or moving image data, and the like.

The embodiments of the present invention are described in detail below. Note that components having the same function are provided with the same numeral, and redundant description is omitted.

### [FIRST EMBODIMENT]

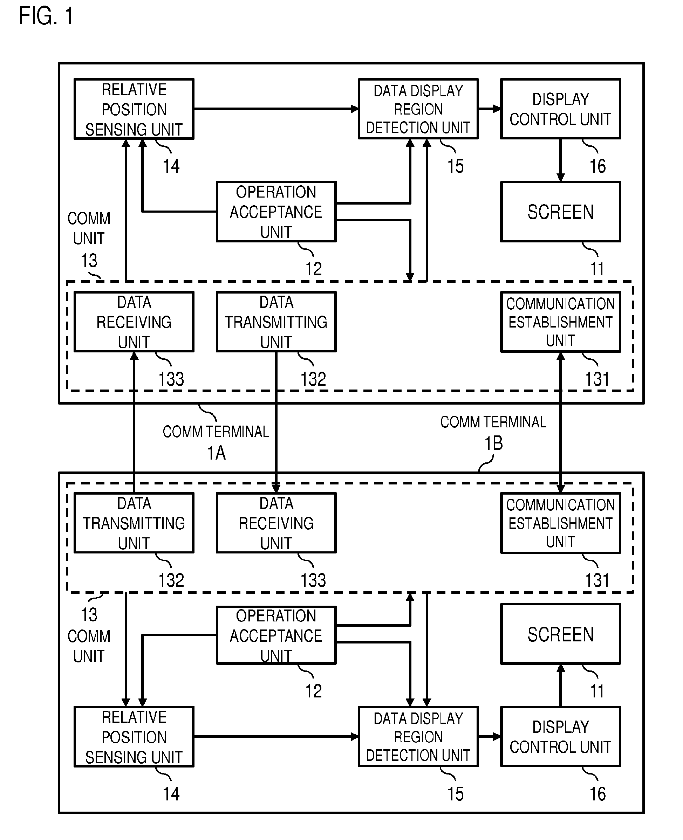

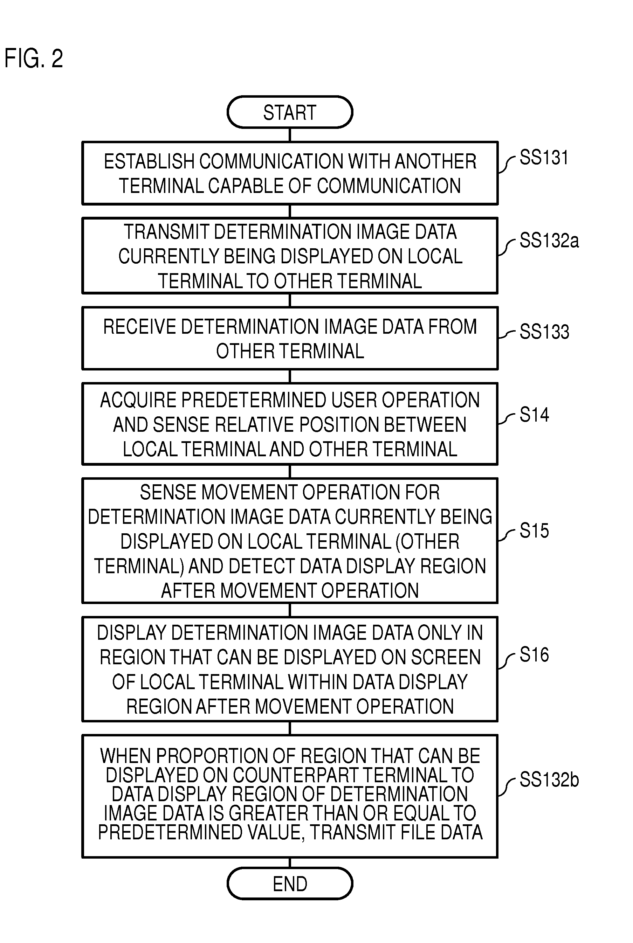

A communication terminal according to a first embodiment of the present invention is described below with reference to Figs. 1 and 2. Fig. 1 is a block diagram illustrating configurations of communication terminals 1A and 1B of the present embodiment. Fig. 2 is a flowchart illustrating operation of the communication terminals 1A and 1B of the present embodiment. Fig. 1 illustrates two communication terminals 1 of the present embodiment. A case in which communication is performed by these two communication terminals 1A and 1B is described below. The communication terminal 1 of the present embodiment includes a screen 11 that can display image data, an operation acceptance unit 12, a communication unit 13, a relative position sensing unit 14, a data display region detection unit 15, and a display control unit 16. The communication unit 13 includes a communication establishment unit 131, a data transmitting unit 132, and a data receiving unit 133.

The operation acceptance unit 12 accepts a user operation (S12). After the communication establishment unit 131, which will be described later, establishes communication, when the operation acceptance unit 12 of a local terminal accepts a user operation, the operation acceptance unit 12 of the local terminal transmits details of the user operation, through the data transmitting unit 132 of the local terminal and the data receiving unit 133 of another terminal with which communication is established (also referred to as a counterpart terminal), to the relative position sensing unit 14 and the data display region detection unit 15 of the counterpart terminal. Similarly, when the operation acceptance unit 12 of the counterpart terminal accepts a user operation, the operation acceptance unit 12 of the counterpart terminal transmits details of the user operation, through the data transmitting unit 132 of the counterpart terminal and the data receiving unit 133 of the local terminal, to the relative position sensing unit 14 and the data display region detection unit 15 of the local terminal. In the embodiment, the operation acceptance unit 12 is a touch screen display. Therefore, a user operation is a touch operation such as a press, drag, tap, double tap, or flick on the touch screen display. The communication establishment unit 131 establishes communication with another terminal capable of communication (SS131). In the example in Fig. 1, for the communication establishment unit 131 of the communication terminal 1B, the communication establishment unit 131 of the communication terminal 1A performs an authentication procedure or the like necessary for communication and establishes communication. In the embodiment, the communication establishment unit 131 establishes communication by a wireless LAN method.

After the communication establishment, the data transmitting unit 132 transmits, to the other terminal with which communication is established, determination image data that has not been transmitted to the other terminal with which communication is established and is currently being displayed on the local terminal (SS132a). In the example in Fig. 1, the data transmitting unit 132 of the communication terminal 1A transmits, to the communication terminal 1B, determination image data that has not yet been transmitted to the communication terminal 1B and is currently being displayed on the communication terminal 1A. Similarly, the data transmitting unit 132 of the communication terminal 1B transmits, to the communication terminal 1A, determination image data that has not yet been transmitted to the communication terminal 1A and is currently being displayed on the communication terminal 1B. A timing of determination image data transmission may be any timing after the communication establishment. For example, when the user selects certain determination image data on the communication terminal 1, the data transmitting unit 132 may regard the selection operation as a trigger and transmit determination image data to the other terminal with which communication is established. For example, when the user presses a display position of certain determination image data and the determination image data is selected on the communication terminal 1A, the data transmitting unit 132 of the communication terminal 1A senses whether the selected determination image data has already been transmitted to the communication terminal 1B in the past. When the selected determination image data has not yet been transmitted, the data transmitting unit 132 of the communication terminal 1A transmits the determination image data to the communication terminal 1B. Whether determination image data has already been transmitted to the counterpart terminal in the past can be sensed by checking the file name of the determination image data against the file names of transmitted data recorded in a transmission log. It is assumed that the transmission log is stored in the memory (not illustrated) included in the communication terminal. The data receiving unit 133 receives determination image data from the other terminal with which communication is established (SS133). For example, the data receiving unit 133 of the communication terminal 1A receives, from the data transmitting unit 132 of the communication terminal 1B, determination image data that has not yet been transmitted to the communication terminal 1A and is currently being displayed on the communication terminal 1B. Similarly, the data receiving unit 133 of the communication terminal 1B receives, from the data transmitting unit 132 of the communication terminal 1A, determination image data that has not yet been transmitted to the communication terminal 1B and is currently being displayed on the communication terminal 1A.

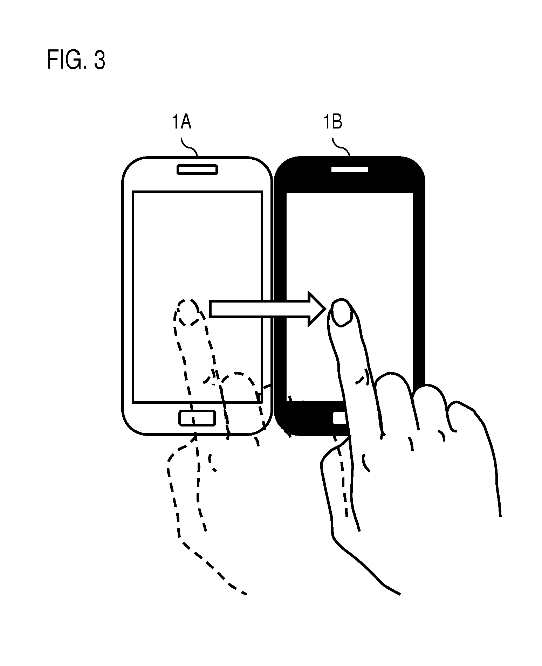

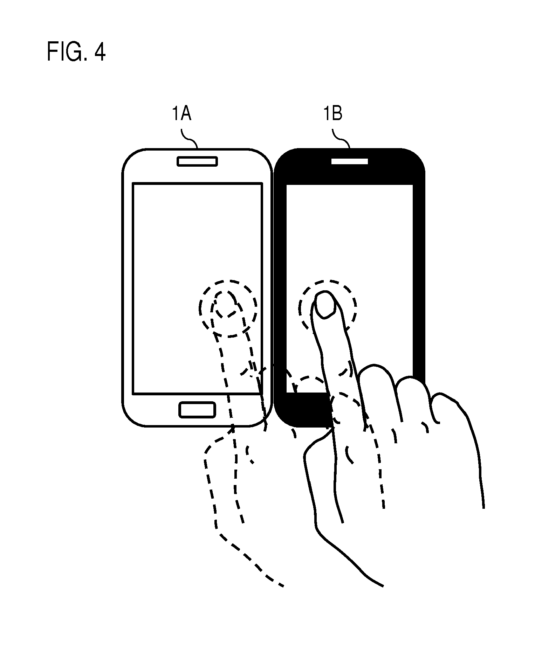

Next, the relative position sensing unit 14 acquires a predetermined user operation and senses a relative position between the local terminal and the other terminal with which communication is established (S14). Examples of predetermined user operations acquired by the relative position sensing unit 14 are described here with reference to Figs. 3 and 4. Figs. 3 and 4 illustrate examples of operations performed to make the relative position sensing unit 14 sense a relative position. For example, as illustrated in Fig. 3, a predetermined user operation can be a drag operation of sliding a finger on the touch screen displays of two terminals, from the communication terminal 1A to the communication terminal 1B. In this case, the relative position sensing unit 14 acquires the drag operation on the communication terminals 1A and 1B, and detects end point coordinates of the drag operation on the terminal on which the drag operation is performed first (communication terminal 1A) and start point coordinates of the drag operation on the terminal on which the drag operation is performed later (communication terminal 1B). In this case, the relative position sensing unit 14 senses a relative position between the communication terminals 1A and 1B assuming that the end point coordinates and the start point coordinates are in adjacent contact. In the example in Fig. 3, the relative position sensing unit 14 senses a relative position assuming that the right side of the communication terminal 1A and the left side of the communication terminal 1B are in contact. At this time, in consideration of the edges of the terminals, the relative position sensing unit 14 may sense a relative position assuming that the rightmost end of the screen region of the communication terminal 1A and the leftmost end of the screen region of the communication terminal 1B are separated by about a few millimeters to one centimeter, or the relative position sensing unit 14 may sense a relative position assuming that the rightmost end of the screen region of the communication terminal 1A and the leftmost end of the screen region of the communication terminal 1B are connected without being separated. In addition, for example, as illustrated in Fig. 4, a predetermined user operation can be a press operation on any of the regions in the touch screens of the communication terminals 1A and 1B. In this case, for example, the relative position sensing unit 14 acquires press operations on the communication terminals 1A and 1B, judges that the terminals are tightly arranged from left to right, in the order in which the press operations are performed, and can sense a relative position assuming that the right side of the communication terminal 1A and the left side of the communication terminal 1B are in contact. To perform the control illustrated in Fig. 4, the user may be notified in advance of rules of the terminal arrangement sequence and the order in which press operations should be performed.

Next, the data display region detection unit 15 acquires a user operation on the local terminal and the other terminal with which communication is established, senses a display position movement operation for the determination image data currently being displayed on the local terminal and the other terminal with which communication is established, and detects a data display region after the movement operation for the determination image data based on the relative position (S15). In the example in Fig. 1, the data display region detection units 15 of the communication terminals 1A and 1B acquire a user operation on the communication terminals 1A and 1B, sense a display position movement operation for the determination image data currently being displayed on the communication terminals 1A and 1B, and detect a data display region after the movement operation for the determination image data based on the relative position. In the embodiment, a user operation acquired by the data display region detection unit 15 may be, for example, a drag operation on the touch screen display. The data display region here means a region that is present in a plane including the display screen of the local terminal and the display screen of the counterpart terminal and should display determination image data after a movement operation by the user is reflected. The data display region is not limited to the inside of the display screen of the local terminal and the display screen of the counterpart terminal, and may be any region in the plane including these display screens. That is, the data display region may be decided while the data display region lies partially or entirely out of the display screen of the local terminal and the display screen of the counterpart terminal. For a touch operation, if the data display region lies entirely out of the display screens of the local terminal and the counterpart terminal, a movement operation for determination image data cannot be continued. Therefore, the data display region detection unit 15 may judge this operation as an error and redisplay the determination image data in a predetermined position in the display screen of either of the terminals.

Next, when at least part of the data display region after the movement operation for the determination image data is included in a region that can be displayed on the screen of the local terminal, the display control unit 16 displays the determination image data in the data display region after the movement operation, only in the region that can be displayed on the screen of the local terminal (S16). Therefore, in the example in Fig. 1, when at least part of the data display region after the movement operation for the determination image data is included in a region that can be displayed on the screen of the communication terminal 1A, the display control unit 16 of the communication terminal 1A displays the determination image data in the data display region after the movement operation, only in the region that can be displayed on the screen of the communication terminal 1A. The same applies to the display control unit 16 of the communication terminal 1B.

Next, when the proportion of a region that can be displayed on the screen of the counterpart terminal to a data display region of determination image data corresponding to file data that has not been transmitted to the counterpart terminal is greater than or equal to a predetermined value, the data transmitting unit 132 transmits the file data corresponding to the determination image data to the counterpart terminal (SS132b). In a description with the example in Fig. 1, when the proportion of a region that can be displayed on the screen of the communication terminal 1B to a data display region of determination image data is, for example, a predetermined value of 100%, and the whole determination image data is displayed on the screen of the communication terminal 1B, the data transmitting unit 132 of the communication terminal 1A transmits file data corresponding to the determination image data to the communication terminal 1B. At this time, the data transmitting unit 132 of the communication terminal 1A senses whether the file data has already been transmitted to the communication terminal 1B in the past, with reference to the transmission log. When the file data has not yet been transmitted, the data transmitting unit 132 of the communication terminal 1A transmits the file data to the communication terminal 1B. The data receiving unit 133 of the communication terminal 1B receives the file data from the communication terminal 1A. The predetermined value for the proportion can be set as, for example, 70% or 80%.

### <Data Transmission and Reception during Communication>

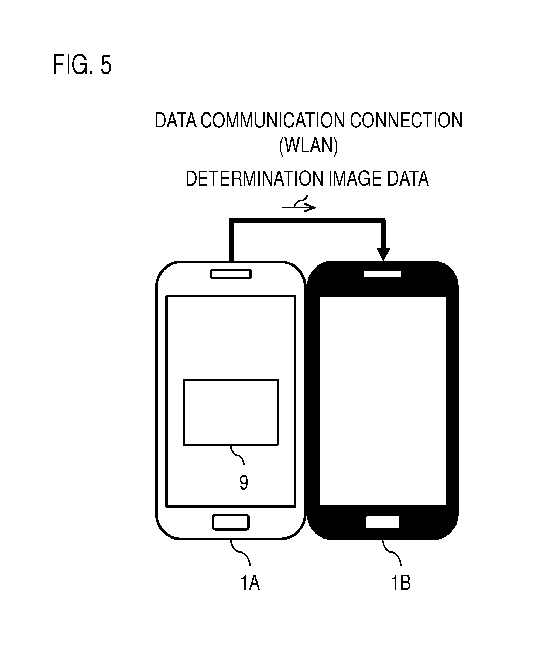

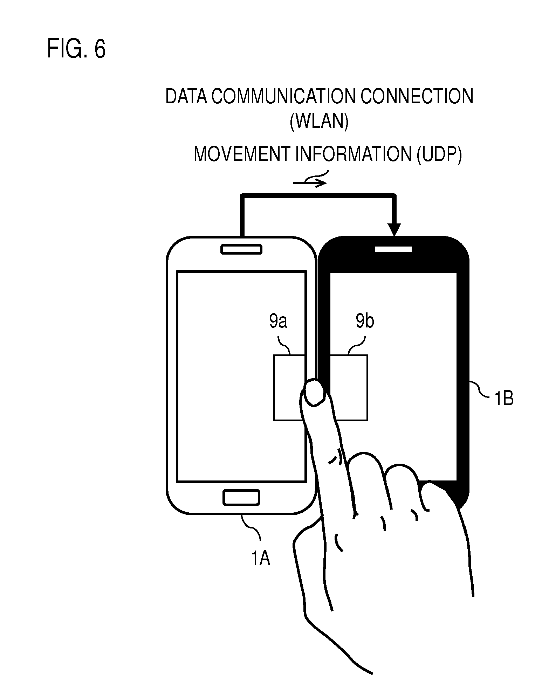

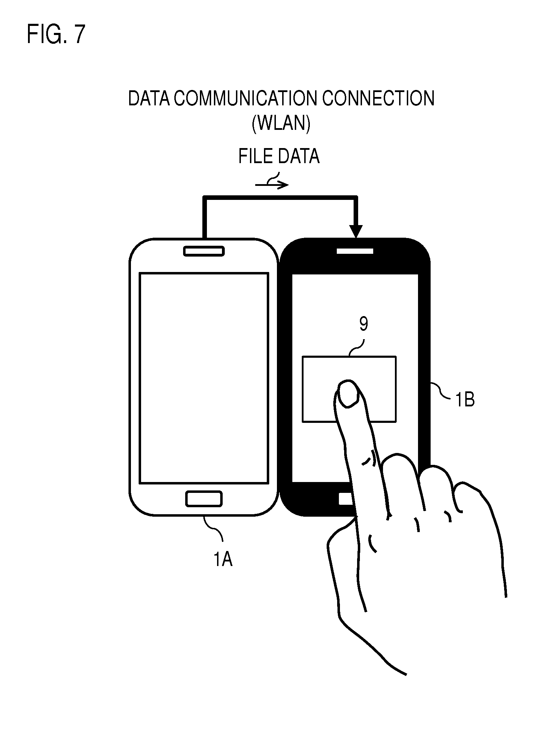

A relationship between user operations and data transmission and reception is described in more detail below with reference to Figs. 5 to 7. Fig. 5 illustrates a determination image data transmission operation performed by the data transmitting unit 132. Fig. 6 illustrates a movement information transmission operation performed by the data transmitting unit 132. Fig. 7 illustrates a file data transmission operation performed by the data transmitting unit 132. As illustrated in Fig. 5, after wireless LAN communication is established, when determination image data 9 is displayed or selected on the communication terminal 1A, the data transmitting unit 132 of the communication terminal 1A senses whether the determination image data 9 has already been transmitted to the communication terminal 1B in the past. When the determination image data 9 has not yet been transmitted, the data transmitting unit 132 of the communication terminal 1A transmits the determination image data 9 to the communication terminal 1B.

As illustrated in Fig. 6, after wireless LAN communication is established, when the operation acceptance unit 12 of the communication terminal 1A accepts a user operation (display position movement operation), the operation acceptance unit 12 of the communication terminal 1A transmits movement information, which is details of the user operation, through the data transmitting unit 132 of the communication terminal 1A and the data receiving unit 133 of the communication terminal 1B, to the data display region detection unit 15 of the communication terminal 1B. Similarly, when the operation acceptance unit 12 of the communication terminal 1B accepts a user operation (display position movement operation), the operation acceptance unit 12 of the communication terminal 1B transmits movement information, which is details of the user operation, through the data transmitting unit 132 of the communication terminal 1B and the data receiving unit 133 of the communication terminal 1A, to the data display region detection unit 15 of the communication terminal 1A. The data display region detection units 15 of the communication terminals 1A and 1B acquire a user operation (movement information) on the communication terminals 1A and 1B, sense a display position movement operation for the determination image data 9 currently being displayed on the communication terminals 1A and 1B, and detect a data display region after the movement operation for the determination image data. The display control unit 16 of the communication terminal 1A displays the determination image data 9 in the data display region after the movement operation, only in the region that can be displayed on the screen of the communication terminal 1A within the data display region. A display result is, for example, as shown by 9a in Fig. 6. Similarly, the display control unit 16 of the communication terminal 1B displays the determination image data 9 in the data display region after the movement operation, only in the region that can be displayed on the screen of the communication terminal 1B within the data display region. A display result is, for example, as shown by 9b in Fig. 6.

As illustrated in Fig. 7, when the proportion of the region that can be displayed on the screen of the communication terminal 1B to the data display region of the determination image data 9 is greater than or equal to a predetermined value, the data transmitting unit 132 of the communication terminal 1A transmits the file data corresponding to the determination image data 9 to the communication terminal 1B. At this time, the data transmitting unit 132 of the communication terminal 1A senses whether the file data has already been transmitted to the communication terminal 1B in the past, with reference to the transmission log. When the file data has not yet been transmitted, the data transmitting unit 132 of the communication terminal 1A transmits the file data corresponding to the determination image data 9 to the communication terminal 1B. The data receiving unit 133 of the communication terminal 1B receives the file data from the communication terminal 1A.

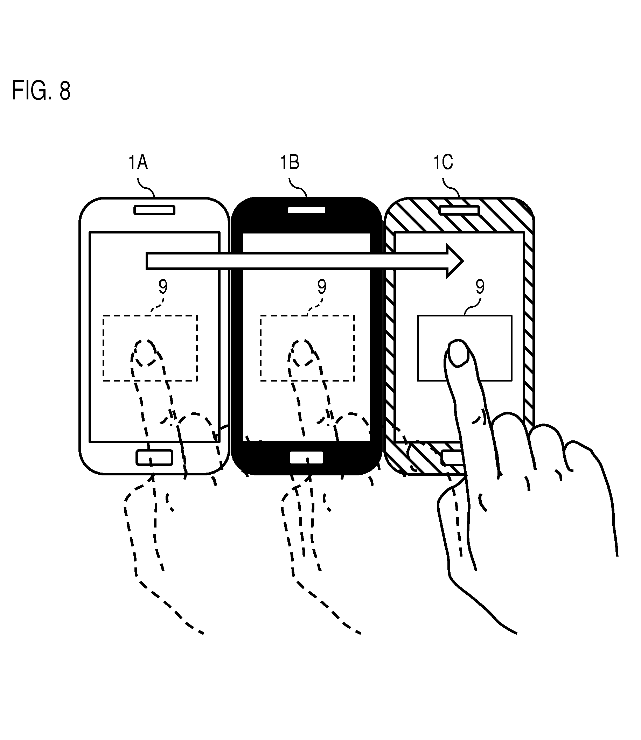

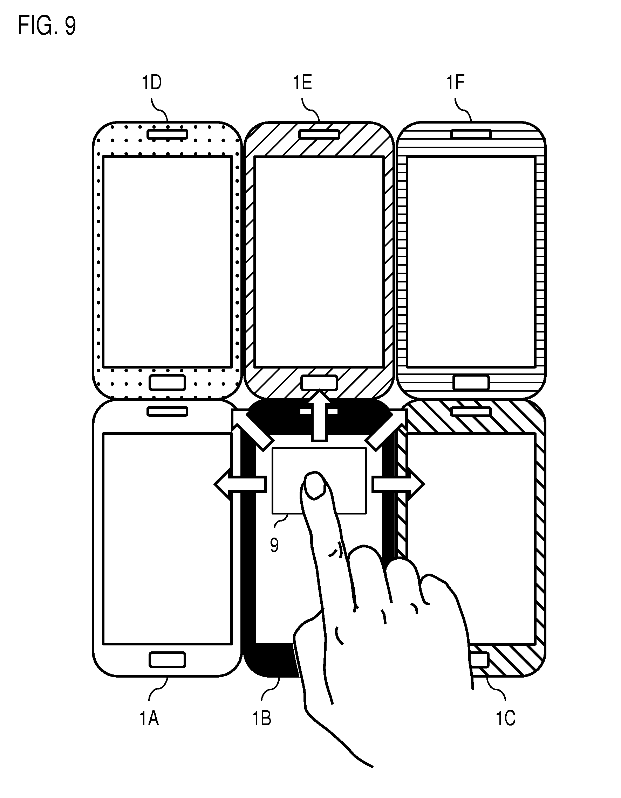

A case in which there are three or more communication terminals of the present embodiment is outlined below with reference to Figs. 8 and 9. Figs. 8 and 9 illustrate screen displays when there are three or more communication terminals. In Fig. 8, the communication terminal 1A and the communication terminal 1B establish communication, the communication terminal 1B is in contact with the right side of the communication terminal 1A, the communication terminal 1B and the communication terminal 1C establish communication, and the communication terminal 1C is in contact with the right side of the communication terminal 1B. In this case, the user can move a display position of the determination image data 9 from the communication terminal 1A through the communication terminal 1B to the communication terminal 1C. When the determination image data 9 is moved from the communication terminal 1A to the communication terminal 1C for a short time, the data transmitting unit 132 of the communication terminal 1A transmits file data corresponding to the determination image data 9 to the communication terminal 1C without transmitting the file data to the communication terminal 1B. Moreover, as in Fig. 9, file data can also be transmitted to the communication terminals 1A, 1C, 1D, IE, and 1F connected to the communication terminal 1B in the vertical, horizontal, and oblique directions of the communication terminal 1B by moving the determination image data 9 displayed on the communication terminal 1B in the vertical, horizontal, and oblique directions.

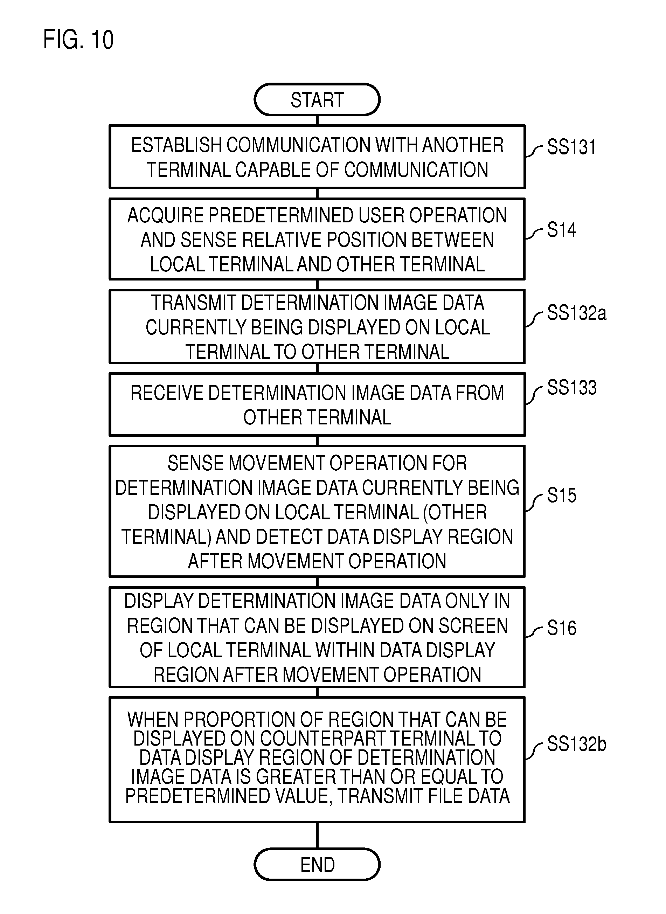

A procedure for performing steps is not limited to the example of a flowchart illustrated in Fig. 2. A variation of the procedure for performing steps is described below with reference to Fig. 10. Fig. 10 is a flowchart illustrating a variation of an operation sequence for the communication terminal 1 of the first embodiment. As illustrated in Fig. 10, the communication establishment unit 131 of the communication terminal 1 establishes communication with another terminal capable of communication (SS131), the relative position sensing unit 14 acquires a predetermined user operation and senses a relative position between the local terminal and the other terminal with which communication is established (S 14). Communication establishment in SS 131 and relative position sensing in S14 may be operations that are simultaneously performed assuming that a predetermined operation by the user for relative position sensing is a trigger. Next, the data transmitting unit 132 transmits, to the other terminal with which communication is established, determination image data that has not been transmitted to the other terminal with which communication is established and is currently being displayed on the local terminal (SS132a). The data receiving unit 133 receives determination image data from the other terminal with which communication is established (SS133). Step S15 and subsequent steps are the same as those in the procedure illustrated in Fig. 2.

Thus, in the communication terminal 1 of the present embodiment, the relative position sensing unit 14 senses a relative position between the local terminal and the counterpart terminal, the data display region detection unit 15 detects a data display region of determination image data, and the display control unit 16 displays the determination image data only in the region that can be displayed on the screen of the local terminal. Accordingly, intuitive and highly preferable user operations are implemented. In addition, when the proportion of a region that can be displayed on the screen of the counterpart terminal to the data display region is greater than or equal to a predetermined value, the data transmitting unit 132 transmits file data corresponding to the determination image data to the counterpart terminal. Accordingly, intuitive and highly preferable data passing is implemented.

### [SECOND EMBODIMENT]

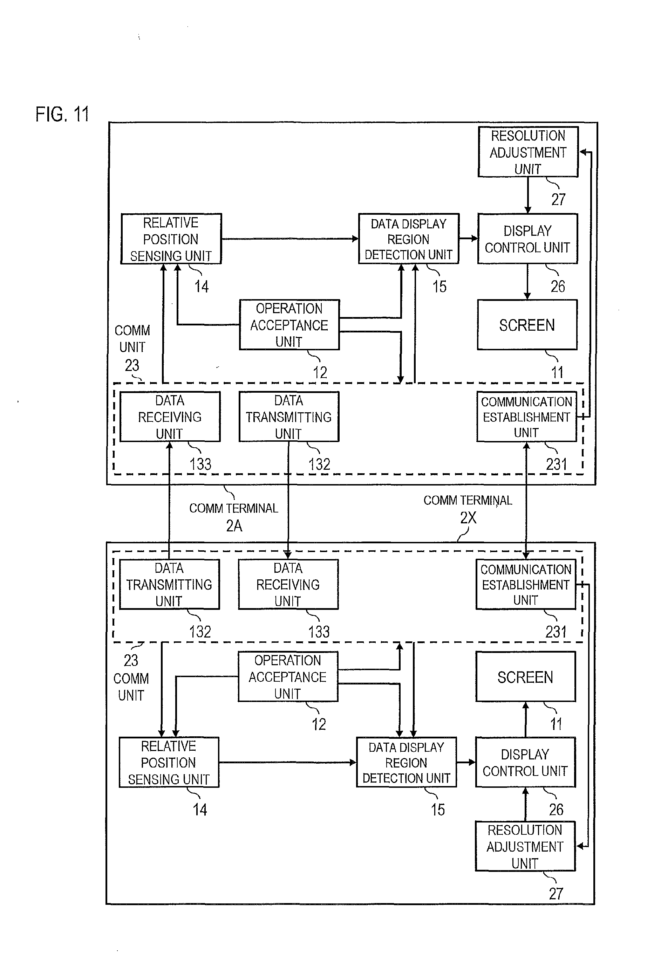

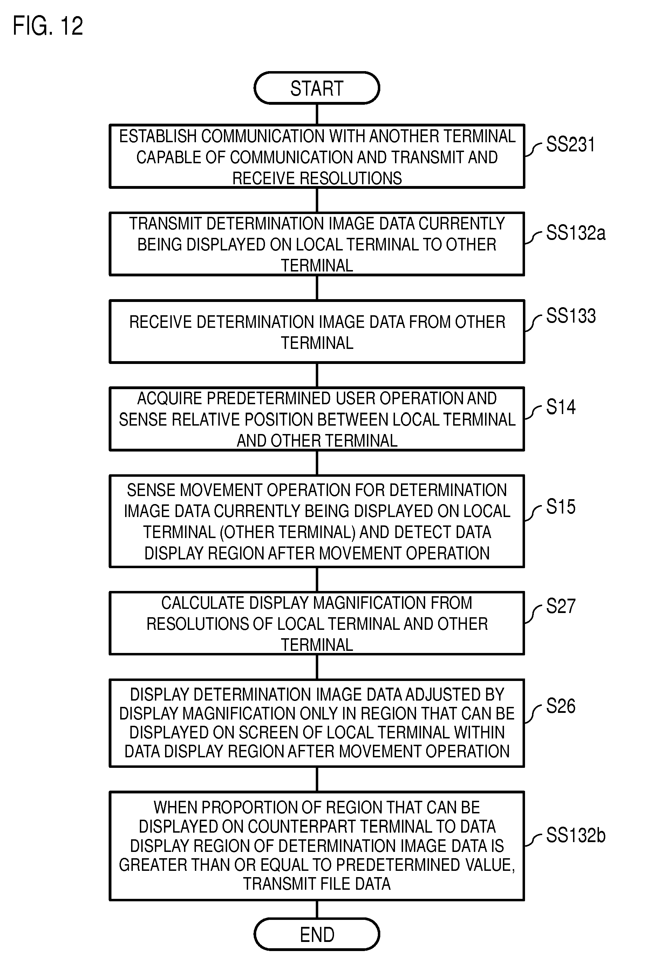

A communication terminal according to a second embodiment of the present invention is described below with reference to Figs. 11 and 12. Fig. 11 is a block diagram illustrating configurations of communication terminals 2A and 2X of the present embodiment. Fig. 12 is a flowchart illustrating operation of the communication terminals 2A and 2X of the present embodiment. Fig. 11 illustrates two communication terminals 2 (2A and 2X) of the present embodiment. It is assumed that the communication terminal 2A is a mobile terminal, while the communication terminal 2X is a tablet terminal that is larger in size than and different in resolution from the communication terminal 2A. A case in which communication is performed by these two communication terminals 2A and 2X is described below. The communication terminal 2 of the present embodiment includes the screen 11 that can display image data, the operation acceptance unit 12, a communication unit 23, the relative position sensing unit 14, the data display region detection unit 15, a display control unit 26, and a resolution adjustment unit 27. The communication unit 23 includes a communication establishment unit 231, the data transmitting unit 132, and the data receiving unit 133. The communication unit 23 (communication establishment unit 231), the display control unit 26, and the resolution adjustment unit 27, which are differences from the first embodiment, are described in detail below.

The communication establishment unit 231 establishes communication with another terminal capable of communication, receives a resolution of the other terminal capable of communication, and transmits a resolution of the local terminal (SS231). In the example in Fig. 11, for the communication establishment unit 231 of the communication terminal 2X, the communication establishment unit 231 of the communication terminal 2A performs an authentication procedure or the like necessary for communication, establishes communication, receives a resolution of the communication terminal 2X, and transmits a resolution of the communication terminal 2A. The resolution adjustment unit 27 calculates a display magnification of an image based on the received resolution of other terminal and the resolution of the local terminal (S27). A resolution is typically determined in units of dots per inch (dpi). On the other hand, the number of horizontal and vertical dots for determination image data (icon images and thumbnail images) is fixed, and therefore a display size (inch) of a determination image can be obtained by dividing the number of horizontal and vertical dots for determination image data by a resolution (dpi). Therefore, a display magnification of an image can be obtained from the reciprocal of the dpi ratio. When at least part of the data display region after the movement operation for the determination image data is included in a region that can be displayed on the screen of the local terminal, the display control unit 26 displays the determination image data adjusted by the display magnification in the data display region after the movement operation, only in the region that can be displayed on the screen of the local terminal (S26).

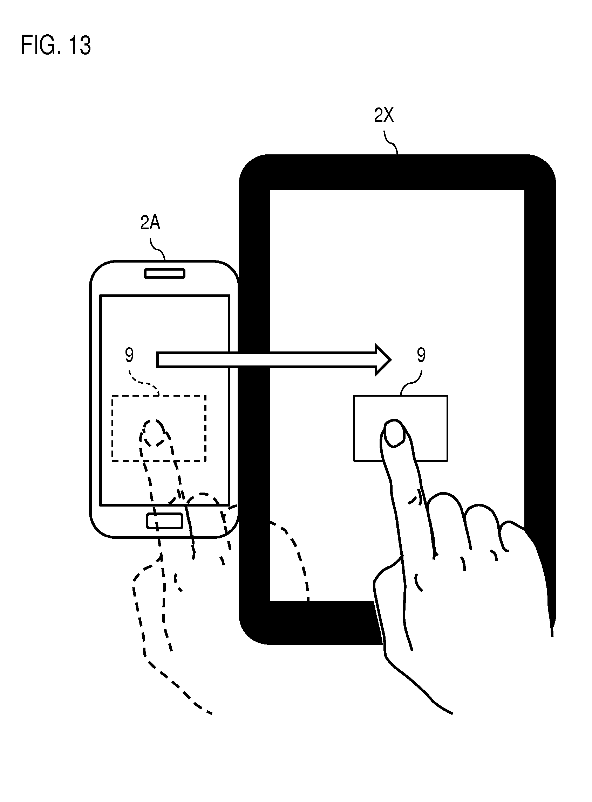

A screen display between the communication terminals 2A and 2X is described with reference to Fig. 13. Fig. 13 illustrates a screen display between terminals with different resolutions and screen sizes (communication terminals 2A and 2X). As illustrated in Fig. 13, when the determination image data 9 is moved from the communication terminal 2A to the communication terminal 2X, the display control unit 26 of the communication terminal 2X displays the determination image data 9 adjusted by the calculated display magnification. Accordingly, the display size of the determination image data 9 displayed on the communication terminal 2A becomes equal to the display size of the determination image data 9 displayed on the communication terminal 2X.

Thus, in the communication terminal 2 of the present embodiment, the communication establishment unit 231 receives a resolution of the counterpart terminal, the resolution adjustment unit 27 calculates a display magnification of an image based on the resolutions of the local terminal and the counterpart terminal, and the display control unit 26 displays determination image data adjusted by the calculated display magnification. Accordingly, the display size of determination image data can always be maintained equally between a plurality of terminals and more intuitive user operations can be implemented.

### [THIRD EMBODIMENT]

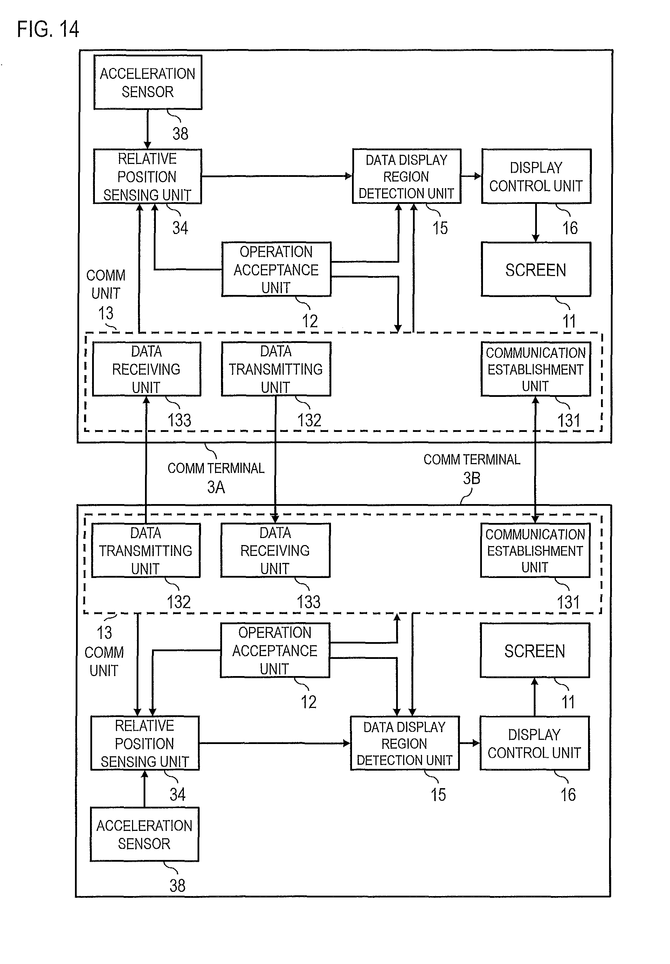

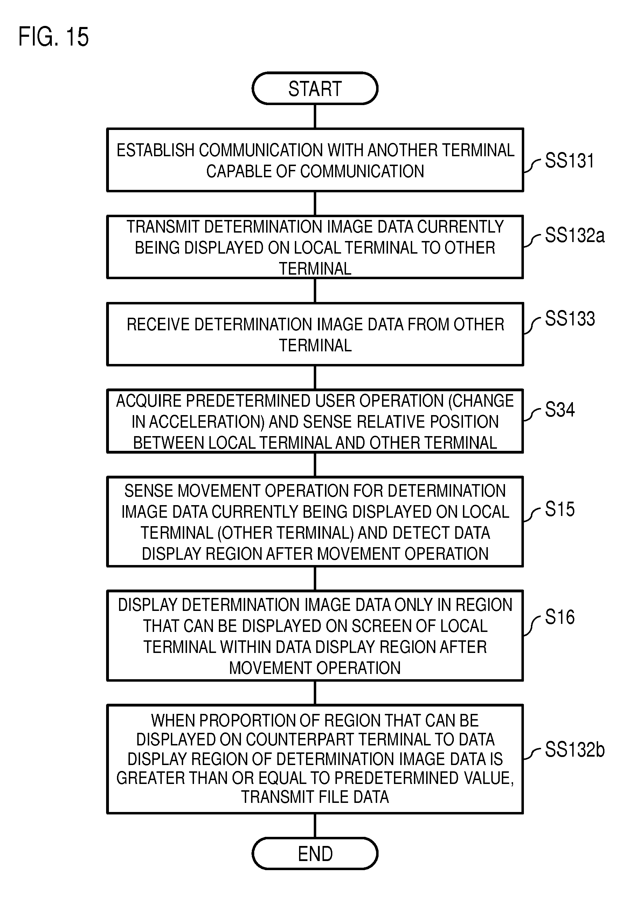

A communication terminal according to a third embodiment of the present invention is described below with reference to Figs. 14 and 15. Fig. 14 is a block diagram illustrating configurations of communication terminals 3A and 3B of the present embodiment. Fig. 15 is a flowchart illustrating operation of the communication terminals 3A and 3B of the present embodiment. Fig. 14 illustrates two communication terminals 3 (3A and 3B) of the present embodiment. A case in which communication is performed by these two communication terminals 3A and 3B is described below. The communication terminal 3 of the present embodiment includes the screen 11 that can display image data, the operation acceptance unit 12, the communication unit 13, a relative position sensing unit 34, the data display region detection unit 15, the display control unit 16, and an acceleration sensor 38. The relative position sensing unit 34 and the acceleration sensor 38, which are differences from the first embodiment, are described in detail below.

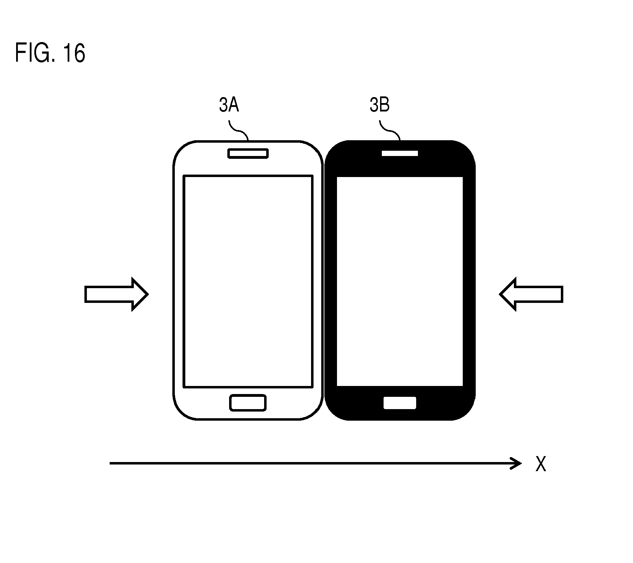

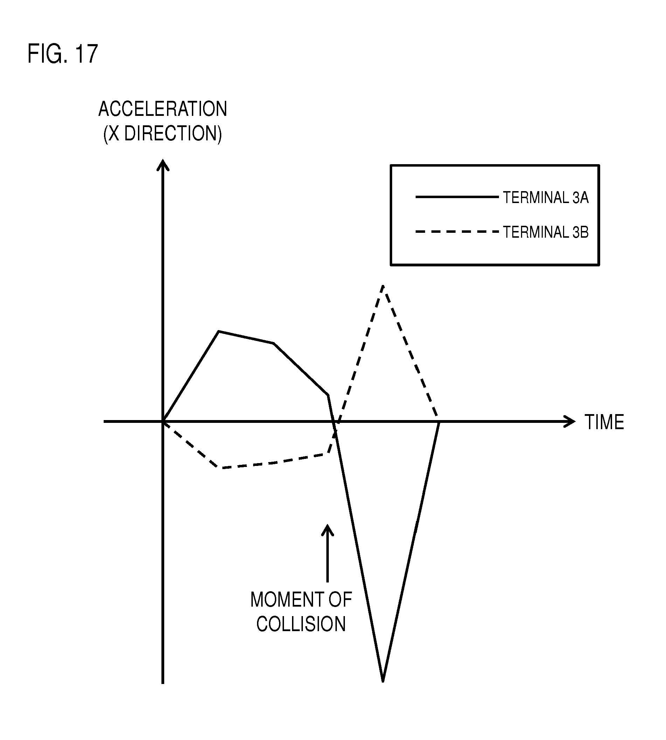

The acceleration sensor 38 measures an acceleration applied to a terminal. The relative position sensing unit 34 acquires, as a predetermined user operation, a change amount in the acceleration applied to a local terminal and another terminal with which communication is established, and senses a relative position between the local terminal and the other terminal with which communication is established (S34). Operation of the relative position sensing unit 34 is described in detail with reference to specific examples illustrated in Figs. 16 and 17. Fig. 16 illustrates an example of an operation performed to make the relative position sensing unit 34 sense a relative position. Fig. 17 illustrates temporal changes in an acceleration applied to the communication terminals 3A and 3B. The right arrow in Fig. 16 indicates a direction of an acceleration that the user applies to the communication terminal 3A. The left arrow in Fig. 16 indicates a direction of an acceleration that the user applies to the communication terminal 3B. The right arrow and the left arrow are assumed to be parallel, and an axis pointing to the right as positive in a direction parallel to these arrows is taken as the x axis. In this case, in a state in Fig. 16, an acceleration is applied to the communication terminal 3A in the x axis positive direction, and the communication terminal 3A is moved in the x axis positive direction. On the other hand, an acceleration is applied to the communication terminal 3B in the x axis negative direction, and the communication terminal 3B is moved in the x axis negative direction. Then, when the communication terminals 3A and 3B collide with each other, a large acceleration is applied to the communication terminal 3A in the x axis negative direction and a large acceleration is applied to the communication terminal 3B in the x axis positive direction, at the moment of collision. A graphic representation of these acceleration changes can be Fig. 17. Fig. 17 shows graphs of time-series changes in the acceleration, with the vertical axis representing the acceleration in the x axis direction and the horizontal axis representing the time. The graph denoted by a solid line indicates time-series changes in the acceleration applied to the terminal 3A. The graph denoted by a broken line indicates time-series changes in the acceleration applied to the terminal 3B. As in Fig. 17, when the moment at which a change amount in the acceleration becomes greater than or equal to a predetermined value is considered as the moment of collision with the counterpart terminal, and the direction of the acceleration immediately after the collision is acquired, then a relative position between the counterpart terminal and the local terminal can be sensed.

Therefore, the acceleration sensor 38 measures an acceleration in a predetermined direction (x axis direction in the example in Fig. 17), and the relative position sensing unit 34 acquires time-series changes in the acceleration in the direction in which the acceleration sensor 38 makes the measurement. The relative position sensing unit 34 acquires a time point at which a change amount in the acceleration becomes greater than or equal to a predetermined value, from the acquired time-series changes in the acceleration in the x axis direction. The relative position sensing unit 34 senses a relative position between the counterpart terminal and the local terminal, from the direction of the acceleration at the time point.

Thus, in the communication terminal 3 of the present embodiment, the relative position sensing unit 34 senses a relative position between the counterpart terminal and the local terminal, from the direction of the acceleration at a time point at which a change amount in the acceleration becomes greater than or equal to a predetermined value. Accordingly, more intuitive user operations can be implemented because the user can make the communication terminal sense the relative position by just performing a simple operation of causing the communication terminals to collide with each other.

### [FOURTH EMBODIMENT]

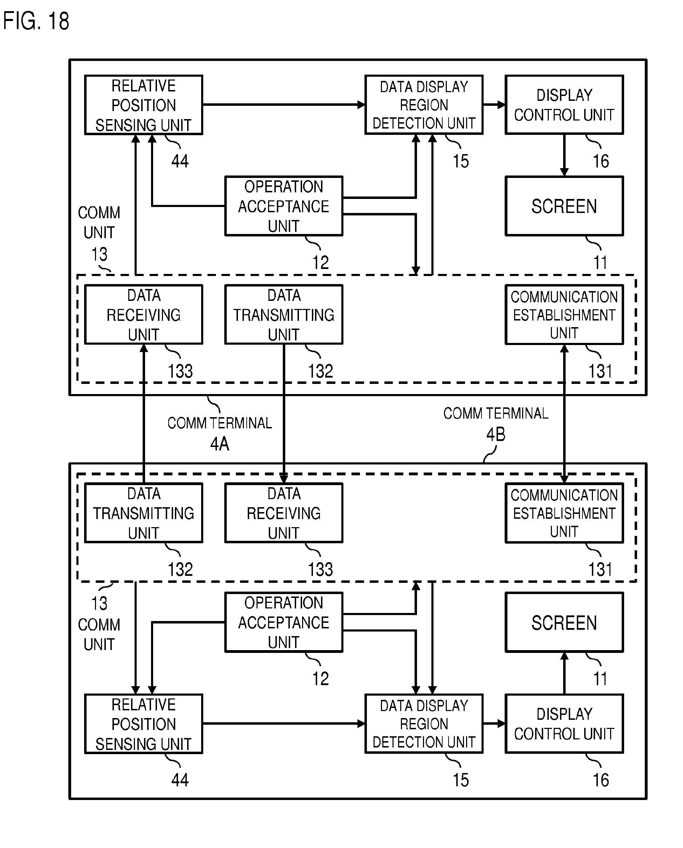

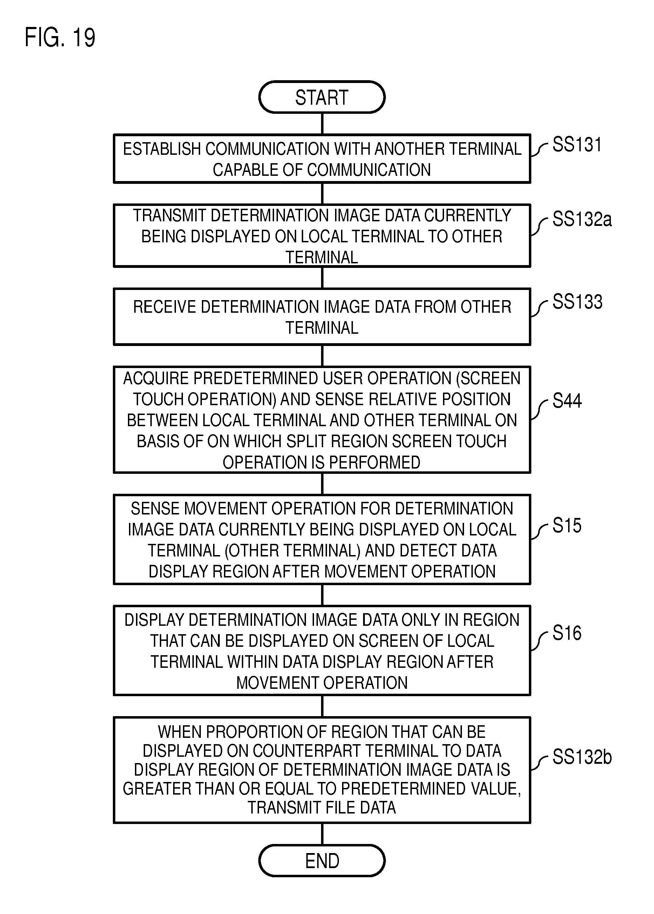

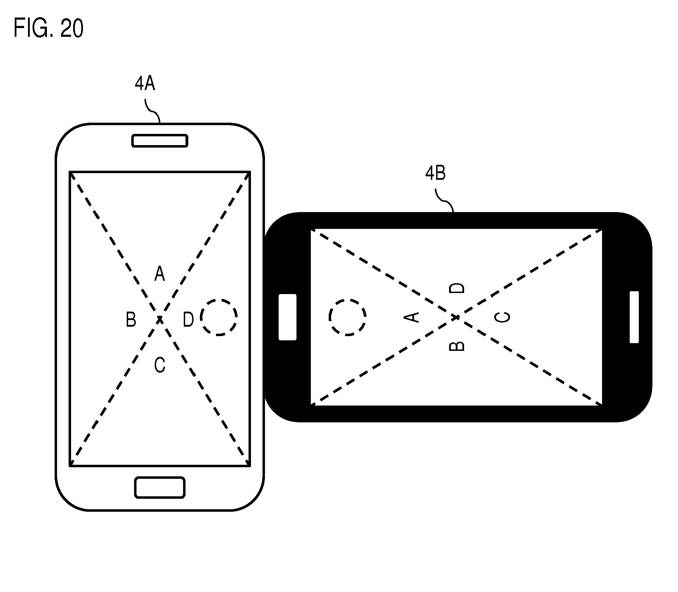

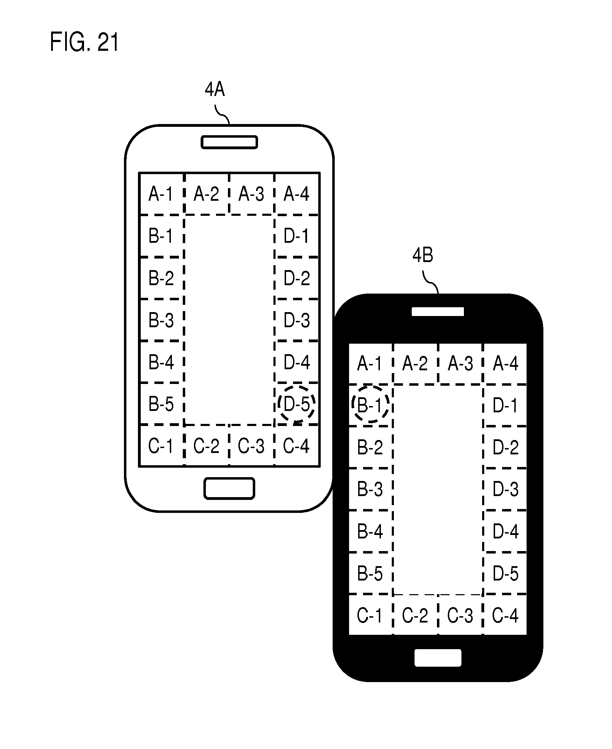

A communication terminal according to a fourth embodiment of the present invention is described below with reference to Figs. 18 and 19. Fig. 18 is a block diagram illustrating configurations of communication terminals 4A and 4B of the present embodiment. Fig. 19 is a flowchart illustrating operation of the communication terminals 4A and 4B of the present embodiment. Fig. 18 illustrates two communication terminals 4 (4A and 4B) of the present embodiment. A case in which communication is performed by these two communication terminals 4A and 4B is described below. The communication terminal 4 of the present embodiment includes the screen 11 that can display image data, the operation acceptance unit 12, the communication unit 13, a relative position sensing unit 44, the data display region detection unit 15, and the display control unit 16. The relative position sensing unit 44, which is a difference from the first embodiment, is described in detail below. The relative position sensing unit 44 senses a relative position between a local terminal and another terminal with which communication is established, on the basis of on which split region a screen touch operation is acquired, among split regions obtained by splitting the screen 11 into a plurality of regions in advance (S44). Operation of the relative position sensing unit 44 is described in detail with reference to specific examples illustrated in Figs. 20 and 21. Figs. 20 and 21 illustrate preset split regions. For example, as in Fig. 20, the relative position sensing unit 44 prestores four split regions A, B, C, and D divided by diagonal lines on the screen 11, and detects on which split region a user operation is performed as a screen touch operation. In the example in Fig. 20, the relative position sensing unit 44 of the communication terminal 4A acquires a screen touch operation on the split region D. On the other hand, the relative position sensing unit 44 of the communication terminal 4B acquires a screen touch operation on the split region A. Based on the touch operations on the split region D of the communication terminal 4A and the split region A of the communication terminal 4B, the relative position sensing units 44 of the communication terminals 4A and 4B sense a relative position between the communication terminal 4A and the communication terminal 4B assuming that the right side of the communication terminal 4A is in contact with the top side of the communication terminal 4B. Moreover, for example, as in Fig. 21, the relative position sensing unit 44 prestores square split regions A-1 to A-4, B-1 to B-5, C-1 to C-4, and D-1 to D-5 sequentially positioned so as to rim the screen 11 on the left, right, upper, and lower sides, and detects on which split region a user operation is performed as a screen touch operation. In the example in Fig. 21, the relative position sensing unit 44 of the communication terminal 4A acquires a screen touch operation on the split region D-5. On the other hand, the relative position sensing unit 44 of the communication terminal 4B acquires a screen touch operation on the split region B-1. Based on the touch operations on the split region D-5 of the communication terminal 4A and the split region B-1 of the communication terminal 4B, the relative position sensing units 44 of the communication terminals 4A and 4B sense a relative position between the communication terminal 4A and the communication terminal 4B assuming that the communication terminal 4A end near the split region D-5 is in contact with the communication terminal 4B end near the split region B-1.

Thus, in the communication terminal 4 of the present embodiment, the relative position sensing unit 44 senses a relative position between a local terminal and another terminal with which communication is established, on the basis of on which split region a screen touch operation is acquired, among split regions obtained by splitting the screen 11 into a plurality of regions in advance. Accordingly, relative positions can be sensed more accurately, and more real screen displays can be implemented.

### [FIFTH EMBODIMENT]

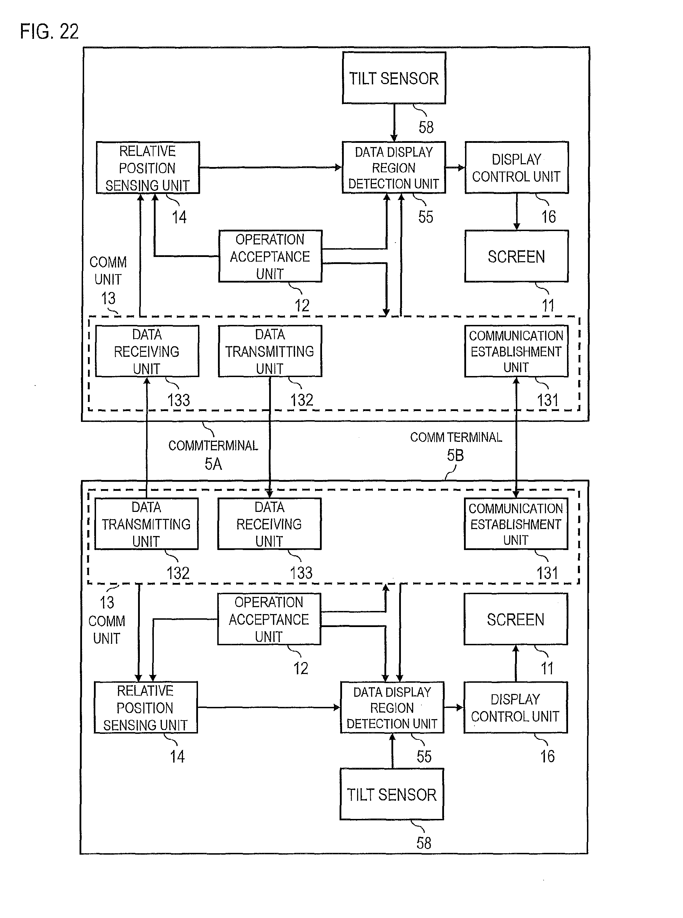

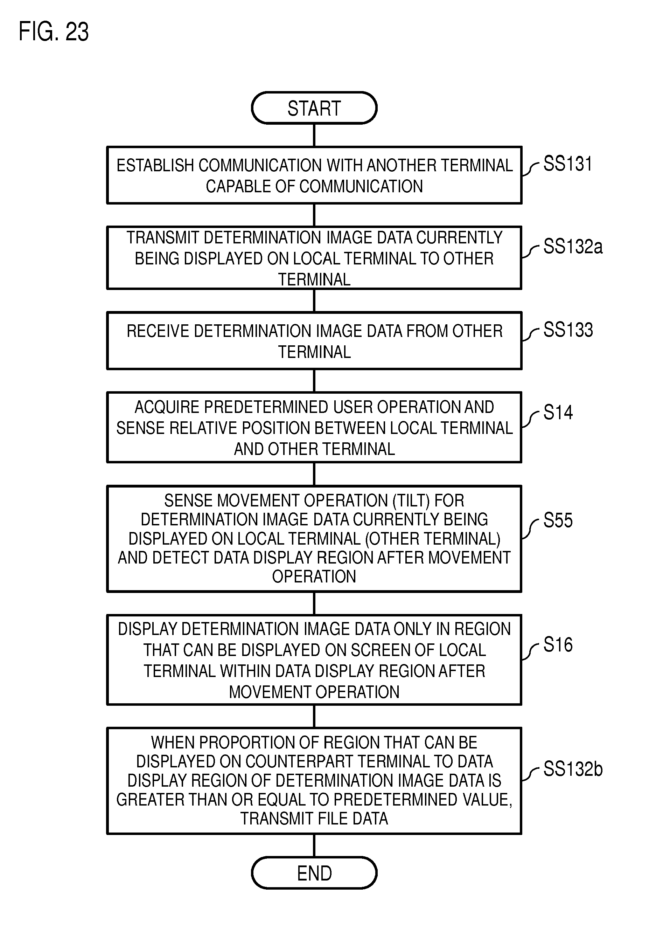

A communication terminal according to a fifth embodiment of the present invention is described below with reference to Figs. 22 and 23. Fig. 22 is a block diagram illustrating configurations of communication terminals 5A and 5B of the present embodiment. Fig. 23 is a flowchart illustrating operation of the communication terminals 5A and 5B of the present embodiment. Fig. 22 illustrates two communication terminals 5 (5A and 5B) of the present embodiment. A case in which communication is performed by these two communication terminals 5A and 5B is described below. The communication terminal 5 of the present embodiment includes the screen 11 that can display image data, the operation acceptance unit 12, the communication unit 13, the relative position sensing unit 14, a data display region detection unit 55, the display control unit 16, and a tilt sensor 58. The data display region detection unit 55 and the tilt sensor 58, which are differences from the first embodiment, are described in detail below.

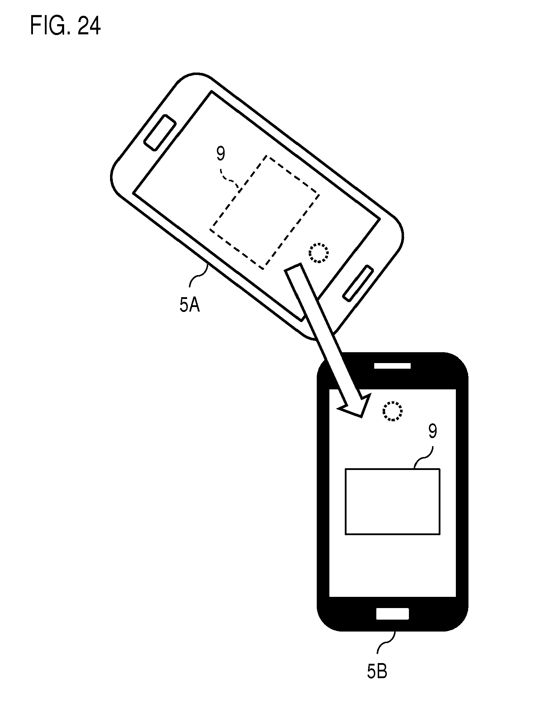

The tilt sensor 58 senses a tilt of a terminal. The tilt sensor can be implemented with an acceleration sensor, an angular velocity sensor, or the like. The data display region detection unit 55 acquires a tilt of a local terminal and another terminal with which communication is established, detects the tilt as a display position movement operation, and detects a data display region after a movement operation for determination image data (S55). Operation of the data display region detection unit 55 is described in detail with reference to a specific example illustrated in Fig. 24. Fig. 24 illustrates an aspect in which determination image data is moved by tilting a terminal. As illustrated in Fig. 24, when the communication terminal 5A is tilted, the data display region detection unit 55 acquires the tilt of the communication terminal 5A, detects the acquired tilt as a display position movement operation indicating that determination image data is to be moved in a vertically downward direction, and detects a data display region after the movement operation for the determination image data 9. A movement speed in a vertically downward direction can be predetermined. A slow movement speed setting has the effect of making the determination image data 9 seem to sink under water because the determination image data 9 is moved slowly in the vertically downward direction. As illustrated in Fig. 24, the determination image data 9 that is initially displayed on the communication terminal 5A falls in the vertically downward direction when the communication terminal 5A is tilted. Then, the determination image data 9 is moved to a region that can be displayed on the communication terminal 5B located in the vertically downward direction of the communication terminal 5A. The display control unit 16 of the communication terminal 5B displays the determination image data 9 in the data display region after the movement operation.

Thus, in the communication terminal 5 of the present embodiment, the data display region detection unit 55 detects a tilt of a terminal as a display position movement operation. Accordingly, the user can pass data as if to pour water, and intuitive and highly preferable user operations and data passing are implemented.

Each type of processing described above may be executed not only time sequentially according to the order in the description but also in parallel or individually when necessary or according to the processing capability of each apparatus that executes the processing. It should be appropriated that appropriate changes can be made to the embodiments without departing from the scope of the present invention.

When the configurations described above are implemented by a computer, the processing details of the functions that should be provided by each apparatus are described in a program. When the program is executed by the computer, the processing functions are implemented on the computer.

The program containing the processing details can be recorded in a computer-readable recording medium. The computer-readable recording medium may be, for example, any recording medium such as a magnetic recording device, an optical disc, a magneto-optical recording medium, and a semiconductor memory.

The program is distributed by selling, transferring, or lending a portable recording medium, such as a DVD or a CD-ROM, with the program recorded on it, for example. The program may also be distributed by storing the program in a storage unit of a server computer and transferring the program from the server computer to another computer through a network.

A computer that executes this type of program first stores the program recorded on a portable recording medium or the program transferred from the server computer in its storage unit, for example. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer.

The program of this form includes information that is provided for use in processing by the computer and is treated correspondingly as a program (something that is not a direct instruction to the computer but is data or the like that has characteristics that determine the processing executed by the computer). In this form, each apparatus is implemented by executing the predetermined program on the computer, but at least part of the processing details may be implemented by hardware.

## Claims

1. A communication terminal including a screen that can display image data, where image data used to determine file contents is referred to as determination image data, the communication terminal comprising:
an operation acceptance unit that accepts a user operation;
a communication establishment unit that establishes communication with another terminal capable of communication;
a data transmitting unit that transmits, to the other terminal with which communication is established, determination image data that has not been transmitted to the other terminal with which communication is established and is currently being displayed on the local terminal;
a data receiving unit that receives the determination image data from the other terminal with which communication is established;
a relative position sensing unit that acquires a predetermined user operation and senses a relative position between the local terminal and the other terminal with which communication is established;
a data display region detection unit that acquires a user operation on the local terminal and the other terminal with which communication is established, senses a display position movement operation for the determination image data currently being displayed on the local terminal and the other terminal with which communication is established, and detects a data display region after movement operation for the determination image data on the basis of the relative position; and
a display control unit that, when at least part of the data display region after the movement operation for the determination image data is included in a region that can be displayed on the screen of the local terminal, displays the determination image data in the data display region after the movement operation, only in the region that can be displayed on the screen of the local terminal.

2. The communication terminal according to Claim 1, further comprising:
an acceleration sensor that measures an acceleration applied to a terminal,
wherein
the relative position sensing unit acquires, as the predetermined user operation, a change amount in an acceleration applied to the local terminal and the other terminal with which communication is established.

3. The communication terminal according to Claim 1, wherein
the relative position sensing unit acquires, as the predetermined user operation, a screen touch operation on the local terminal and the other terminal with which communication is established.

4. The communication terminal according to Claim 3, wherein
the relative position sensing unit senses a relative position between the local terminal and the other terminal with which communication is established, on the basis of on which split region a screen touch operation is acquired, among split regions obtained by splitting the screen into a plurality of regions in advance.

5. The communication terminal according to any one of Claims 1 to 4, wherein
the data transmitting unit transmits, when a proportion of a region that can be displayed on the screen of the other terminal with which communication is established to a data display region of determination image data corresponding to file data that has not been transmitted to the other terminal with which communication is established is greater than or equal to a predetermined value, the file data corresponding to the determination image data to the other terminal with which communication is established; and
the data receiving unit receives file data from the other terminal with which communication is established.

6. The communication terminal according to any one of Claims 1 to 5, wherein
the data display region detection unit acquires a drag operation for determination image data on the local terminal and the other terminal with which communication is established and detects the drag operation as the display position movement operation.

7. The communication terminal according to any one of Claims 1 to 5, further comprising:
a tilt sensor that senses a tilt of a terminal,
wherein
the data display region detection unit acquires a tilt of the local terminal and the other terminal with which communication is established and detects the tilt as the display position movement operation.

8. A screen display method performed by a communication terminal including a screen that can display image data, where image data used to determine file contents is referred to as determination image data, the screen display method comprising:
an operation acceptance step of accepting a user operation;
a communication establishment step of establishing communication with another terminal capable of communication;
a data transmitting step of transmitting, to the other terminal with which communication is established, determination image data that has not been transmitted to the other terminal with which communication is established and is currently being displayed on the local terminal;
a data receiving step of receiving the determination image data from the other terminal with which communication is established;
a relative position sensing step of acquiring a predetermined user operation and sensing a relative position between the local terminal and the other terminal with which communication is established;
a data display region detection step of acquiring a user operation on the local terminal and the other terminal with which communication is established, sensing a display position movement operation for the determination image data currently being displayed on the local terminal and the other terminal with which communication is established, and detecting a data display region after movement operation for the determination image data on the basis of the relative position; and
a display control step of, when at least part of the data display region after the movement operation for the determination image data is included in a region that can be displayed on the screen of the local terminal, displaying the determination image data in the data display region after the movement operation, only in the region that can be displayed on the screen of the local terminal.

9. A screen display method performed by a communication terminal including a screen that can display image data, where image data used to determine file contents is referred to as determination image data, the screen display method comprising:
an operation acceptance step of accepting a user operation;
a communication establishment step of establishing communication with another terminal capable of communication;
a relative position sensing step of acquiring a predetermined user operation and sensing a relative position between the local terminal and the other terminal with which communication is established;
a data transmitting step of transmitting, to the other terminal with which communication is established, determination image data that has not been transmitted to the other terminal with which communication is established and is currently being displayed on the local terminal;
a data receiving step of receiving the determination image data from the other terminal with which communication is established;
a data display region detection step of acquiring a user operation on the local terminal and the other terminal with which communication is established, sensing a display position movement operation for the determination image data currently being displayed on the local terminal and the other terminal with which communication is established, and detecting a data display region after movement operation for the determination image data on the basis of the relative position; and
a display control step of, when at least part of the data display region after the movement operation for the determination image data is included in a region that can be displayed on the screen of the local terminal, displaying the determination image data in the data display region after the movement operation, only in the region that can be displayed on the screen of the local terminal.

10. The screen display method according to Claim 8 or 9, wherein
the communication terminal further comprises an acceleration sensor that measures an acceleration applied to a terminal; and
the relative position sensing step is a step of acquiring, as the predetermined user operation, a change amount in an acceleration applied to the local terminal and the other terminal with which communication is established.

11. The screen display method according to Claim 8 or 9, wherein
the relative position sensing step is a step of acquiring, as the predetermined user operation, a screen touch operation on the local terminal and the other terminal with which communication is established.

12. The screen display method according to Claim 11, wherein
the relative position sensing step is a step of sensing a relative position between the local terminal and the other terminal with which communication is established, on the basis of on which split region a screen touch operation is acquired, among split regions obtained by splitting the screen into a plurality of regions in advance.

13. The screen display method according to any one of Claims 8 to 12, wherein
the data transmitting step is a step of transmitting, when a proportion of a region that can be displayed on the screen of the other terminal with which communication is established to a data display region of determination image data corresponding to file data that has not been transmitted to the other terminal with which communication is established is greater than or equal to a predetermined value, the file data corresponding to the determination image data to the other terminal with which communication is established; and
the data receiving step is a step of receiving file data from the other terminal with which communication is established.

14. The screen display method according to any one of Claims 8 to 13, wherein
the data display region detection step is a step of acquiring a drag operation for determination image data on the local terminal and the other terminal with which communication is established and detecting the drag operation as the display position movement operation.

15. The screen display method according to any one of Claims 8 to 13, wherein
the communication terminal further comprises a tilt sensor that senses a tilt of a terminal: and
the data display region detection step is a step of acquiring a tilt of the local terminal and the other terminal with which communication is established and detects the tilt as the display position movement operation.

16. A computer-readable recording medium recording a program for causing a communication terminal to function as a communication terminal according to any one of Claims 1 to 7.
